(19) Europäisches Patentamt / European Patent Office / Office européen des brevets

(11) **EP 4 787 659 A1**

(12) **EUROPEAN PATENT APPLICATION**
published in accordance with Art. 153(4) EPC

(43) Date of publication:
 **05.08.2026 Bulletin 2026/32**

(21) Application number: **24871702.7**

(22) Date of filing: **29.08.2024**

(51) International Patent Classification (IPC):
 *H02J 3/46* (2026.01)   *H02J 3/32* (2026.01)
 *H02J 3/38* (2026.01)

(52) Cooperative Patent Classification (CPC):
 **H02J 3/32; H02J 3/38; H02J 3/46**

(86) International application number:
 **PCT/JP2024/030920**

(87) International publication number:
 **WO 2025/069901 (03.04.2025 Gazette 2025/14)**

(84) Designated Contracting States:
 **AL AT BE BG CH CY CZ DE DK EE ES FI FR GB
 GR HR HU IE IS IT LI LT LU LV MC ME MK MT NL
 NO PL PT RO RS SE SI SK SM TR**
 Designated Extension States:
 **BA**
 Designated Validation States:
 **GE KH MA MD TN**

(30) Priority: **29.09.2023 JP 2023169315**

(71) Applicant: **Panasonic Intellectual Property
 Management Co., Ltd.
 Kadoma-shi, Osaka 571-0057 (JP)**

(72) Inventors:
 • **OKADA, Takashi
  Kadoma-shi, Osaka 571-0057 (JP)**
 • **IGUCHI, Yusuke
  Tokyo 110-0005 (JP)**
 • **FUKUOKA, Masaru
  Kadoma-shi, Osaka 571-0057 (JP)**
 • **SHIMIZU, Atsushi
  Kadoma-shi, Osaka 571-0057 (JP)**

(74) Representative: **Grünecker Patent- und
 Rechtsanwälte
 PartG mbB
 Leopoldstraße 4
 80802 München (DE)**

(54) **POWER CONTROL METHOD, POWER CONTROL DEVICE, AND POWER SOURCE SYSTEM**

(57)   An electric power control method according to the present disclosure includes: when electric power is supplied from a distributed power supply system that includes a photovoltaic power generation apparatus, a fuel cell device, and an electric power storage device to an electric power load of a power consumer, setting an upper limit for electric power generated by the photovoltaic power generation apparatus to a value less than or equal to a difference between a sum of actual electric power demanded by the power consumer and chargeable power of the electric power storage device, which is less than or equal to maximum charging power of the electric power storage device, and actual electric power generated by the fuel cell device.

FIG. 4

SUPPLY ELECTRIC POWER FROM DISTRIBUTED ELECTRIC POWER SYSTEM TO ELECTRIC POWER LOAD OF ELECTRIC-POWER DEMANDING HOUSE — S1

CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER OF ELECTRIC POWER STORAGE DEVICE AND ACTUAL ELECTRIC POWER GENERATED BY FUEL CELL DEVICE — S2

SET UPPER LIMIT FOR ELECTRIC POWER GENERATED BY PHOTOVOLTAIC POWER GENERATION APPARATUS TO VALUE LESS THAN OR EQUAL TO DIFFERENCE IN STEP S2 — S3

# Description

Technical Field

The present disclosure relates to an electric power control method, an electric power control device, and a power supply system.

Background Art

Hitherto, various proposals have been made regarding electric power control of power supply systems. As an example, PTL 1 discloses a photovoltaic power generation system including a photovoltaic cell, a power conditioner, and a control device. The control device acquires the amount of power consumption, calculates an estimated power consumption amount value that is after a predetermined time has elapsed from the amounts of power consumption acquired at multiple times using a function obtained based on regression analysis, and outputs, to the power conditioner, a command value that specifies generated power to be less than or equal to the estimated value. The power conditioner controls the amount of power generated by the photovoltaic cell to be less than or equal to the estimated value on the basis of the command value.

Citation List

Patent Literature

PTL 1: Japanese Patent No. 6792272

Summary of Invention

Technical Problem

As an example, an object of the present disclosure is to provide an electric power control method, an electric power control device, and a power supply system that enable the reverse electric power flow into the power grid from a distributed power supply system to be reduced compared to before.

Solution to Problem

In order to achieve the above object, an electric power control method according to an aspect of the present disclosure includes: when electric power is supplied from a distributed power supply system that includes a photovoltaic power generation apparatus, a fuel cell device, and an electric power storage device to an electric power load of a power consumer, setting an upper limit for electric power generated by the photovoltaic power generation apparatus to a value less than or equal to a difference between a sum of actual electric power demanded by the power consumer and chargeable power of the electric power storage device, which is less than or equal to maximum charging power of the electric power storage device, and actual electric power generated by the fuel cell device.

An aspect of the present disclosure is an electric power control device of a distributed power supply system including a photovoltaic power generation apparatus, a fuel cell device, and an electric power storage device, which supply electric power to an electric power load of a power consumer, and the electric power control device includes a memory device that stores actual electric power demanded by the power consumer, chargeable power of the electric power storage device, which is less than or equal to maximum charging power of the electric power storage device, and actual electric power generated by the fuel cell device, and a controller that sets an upper limit for electric power generated by the photovoltaic power generation apparatus to a value less than or equal to a difference between a sum of the actual electric power demanded by the power consumer and the chargeable power and the actual electric power generated by the fuel cell device.

A power supply system according to an aspect of the present disclosure includes a fuel cell device, an electric power storage device, and the above electric power control device.

Advantageous Effects of Invention

An electric power control method, an electric power control device, and a power supply system according to an aspect of the present disclosure realize an effect in that the reverse electric power flow into the power grid from a distributed power supply system can be reduced compared to before.

Brief Description of Drawings

[Fig. 1] Fig. 1 is a diagram illustrating an example of a power supply system according to a first embodiment.
[Fig. 2] Fig. 2 is a diagram illustrating an example of a distributed power supply system included in the power supply system according to the first embodiment.
[Fig. 3] Fig. 3 is a diagram illustrating an example of an electric power control device according to the first embodiment.
[Fig. 4] Fig. 4 is a flowchart illustrating an example of the operation of the electric power control device (an electric power control method) according to the first embodiment.
[Fig. 5] Fig. 5 is a flowchart illustrating an example of the operation of an electric power control device (an electric power control method) according to Example 1 of the first embodiment.
[Fig. 6] Fig. 6 is a flowchart illustrating an example of the operation of an electric power control device (an electric power control method) according to Example 2 of the first embodiment.

[Fig. 7] Fig. 7 is a diagram illustrating an example of a power supply system according to a second embodiment.

[Fig. 8A] Fig. 8A is a flowchart illustrating an example of the operation of an electric power control device (an electric power control method) according to the second embodiment.

[Fig. 8B] Fig. 8B is a diagram for describing an example of the operation of the electric power control device according to the second embodiment.

Description of Embodiments

PTL 1 describes details of the control of suppressing the reverse electric power flow from the photovoltaic cell into the power grid by causing the amount of electric power generated by the photovoltaic cell to be less than or equal to the estimated power consumption amount value. However, the control of suppressing the reverse electric power flow into the power grid from a distributed power supply system that includes a photovoltaic power generation apparatus, a fuel cell device, and an electric power storage device has not been considered.

Thus, an electric power control method according to a first aspect of the present disclosure includes: when electric power is supplied from a distributed power supply system that includes a photovoltaic power generation apparatus, a fuel cell device, and an electric power storage device to an electric power load of a power consumer, setting an upper limit for electric power generated by the photovoltaic power generation apparatus to a value less than or equal to a difference between a sum of actual electric power demanded by the power consumer and chargeable power of the electric power storage device, which is less than or equal to maximum charging power of the electric power storage device, and actual electric power generated by the fuel cell device.

According to the above, the electric power control method according to this aspect enables the reverse electric power flow into the power grid from the distributed power supply system to be reduced compared to before.

Specifically, the difference between the sum of the actual electric power demanded by the power consumer and the chargeable power of the electric power storage device that is less than or equal to the maximum charging power of the electric power storage device (hereinafter referred to as the chargeable power of the electric power storage device) and the actual electric power generated by the fuel cell device corresponds to electric power that is generated by the photovoltaic power generation apparatus and that can be used to feed electric power to the electric power load and charge the electric power storage device. Thus, by setting the upper limit for the electric power generated by the photovoltaic power generation apparatus to a value less than or equal to the difference between the sum of the actual electric power demanded by the power consumer and the chargeable power of the electric power storage device and the actual electric power generated by the fuel cell device, the electric power control method according to this aspect makes it possible to appropriately suppress the reverse flow of the electric power generated by the photovoltaic power generation apparatus into the power grid, compared to a case where the upper limit for the electric power generated by the photovoltaic power generation apparatus is not set.

An electric power control method according to a second aspect of the present disclosure is based on the electric power control method according to the first aspect, and when a state of charge of the electric power storage device is greater than or equal to a first threshold, which is less than 100%, the chargeable power of the electric power storage device may be reduced, and the difference described above may be calculated.

When the state of charge of the electric power storage device is greater than or equal to the first threshold, which is less than 100%, the electric power storage device is more likely to be fully charged due to the electric power fed from the photovoltaic power generation apparatus to the electric power storage device. When the electric power storage device is fully charged, electric power cannot be further fed from the photovoltaic power generation apparatus to the electric power storage device, and the generated electric power from the photovoltaic power generation apparatus is more likely to flow back into the power grid.

Thus, in the electric power control method according to this aspect, when the state of charge of the electric power storage device is greater than or equal to the first threshold, the chargeable power of the electric power storage device is reduced, and the difference between the sum of the actual electric power demanded by the power consumer and the chargeable power after the above reduction and the actual electric power generated by the fuel cell device is calculated. As a result, by setting the upper limit for the electric power generated by the photovoltaic power generation apparatus to a value less than or equal to this difference, the electric power control method according to this aspect makes it possible to appropriately suppress the reverse flow of the electric power generated by the photovoltaic power generation apparatus into the power grid, compared to a case where such chargeable power is not reduced.

An electric power control method according to a third aspect of the present disclosure is based on the electric power control method according to the second aspect, and a value of the chargeable power of the electric power storage device after the chargeable power of the electric power storage device is reduced may be 0.

According to the above, in the electric power control method according to this aspect, when the chargeable power after the above reduction is 0, the upper limit for the electric power generated by the photovoltaic power generation apparatus is set to a value less than or equal to the difference between the actual electric power demanded by the power consumer and the actual electric power generated by the fuel cell device. As a result, the electric power control method according to this aspect makes it possible to appropriately suppress the reverse flow of the electric power generated by the photovoltaic power generation apparatus into the power grid, compared to a case where the chargeable power is not set to 0.

An electric power control method according to a fourth aspect of the present disclosure is based on the electric power control method according to the second or third aspect, and when the state of charge of the electric power storage device is less than or equal to a second threshold, which is less than the first threshold, the chargeable power after the reduction may be restored to a value of the chargeable power before the reduction, and the difference may be calculated.

If the timing at which the chargeable power is restored to its value before the reduction is when the state of charge of the electric power storage device is less than or equal to the second threshold value, which is less than the first threshold, the possibility of the state of charge of the electric power storage device becoming greater than or equal to the first threshold again in a short time is reduced. In other words, the occurrence of events can be suppressed in which the suppression of the electric power generated by the photovoltaic power generation apparatus and the release of the suppression are repeated in a short period of time.

Moreover, in the electric power control method according to this aspect, when the state of charge of the electric power storage device is less than or equal to the second threshold, the chargeable power after the reduction is restored to its value before the reduction, and the difference between the sum of the actual electric power demanded by the power consumer and the chargeable power and the actual electric power generated by the fuel cell device is calculated. By setting the upper limit for the electric power generated by the photovoltaic power generation apparatus to a value less than or equal to this difference, the electric power control method according to this aspect makes it possible to use the electric power generated by the photovoltaic power generation apparatus effectively. In other words, the upper limit for the electric power generated by the photovoltaic power generation apparatus calculated on the basis of the chargeable power before the reduction is higher than the upper limit for the electric power generated by the photovoltaic power generation apparatus calculated on the basis of the chargeable power generated after the reduction. Then, the higher the upper limit for the electric power generated by the photovoltaic power generation apparatus, the less likely it is that the output of the photovoltaic power generation apparatus will be limited to the upper limit for the generated electric power, so that the electric power generated by the photovoltaic power generation apparatus can be effectively used.

A fifth aspect of the present disclosure is an electric power control device of a distributed power supply system including a photovoltaic power generation apparatus, a fuel cell device, and an electric power storage device, which supply electric power to an electric power load of a power consumer, the electric power control device including: a memory device that stores actual electric power demanded by the power consumer, chargeable power of the electric power storage device, and actual electric power generated by the fuel cell device, and a controller that sets an upper limit for electric power generated by the photovoltaic power generation apparatus to a value less than or equal to a difference between a sum of the actual electric power demanded by the power consumer and the chargeable power and the actual electric power generated by the fuel cell device.

According to such a configuration, the electric power control device according to this aspect enables the reverse electric power that flows into the power grid from the distributed power supply system to be reduced compared to before. The details of the operational effects realized by the electric power control device according to this aspect are substantially the same as those realized by the electric power control method according to the first aspect, and thus description will be omitted.

A power supply system according to a sixth aspect of the present disclosure includes a photovoltaic power generation apparatus, a fuel cell device, an electric power storage device, and the electric power control device according to the fifth aspect.

According to such a configuration, the power supply system according to this aspect enables the reverse electric power flow into the power grid from the distributed power supply system to be reduced compared to before. The details of the operational effects realized by the power supply system according to this aspect are substantially the same as those realized by the electric power control method according to the first aspect, and thus description will be omitted.

In the following, specific examples of the above aspects of the present disclosure will be described with reference to the attached drawings. All of the specific examples described below are examples of the above aspects of the present disclosure. Thus, the shapes, numerical values, constituent elements, and the arrangement positions and connection forms of the constituent elements illustrated below are not intended to limit the scope of the claims, unless stated in the claims.

In addition, among the constituent elements described below, the constituent elements that are not described in the independent claims that represent the highest level concept of the present disclosure are described as optional components. Moreover, description of items that have the same signs in the drawings may be omitted. The drawings are schematic representations of the individual constituent elements for ease of understanding, and there may be cases where the drawings are not exact representations in terms of shape and dimensional ratio.

Furthermore, in the operations of devices, the orders of the processes may be rearranged as necessary, or known processes may be added.

(First Embodiment)

[Device Configuration]

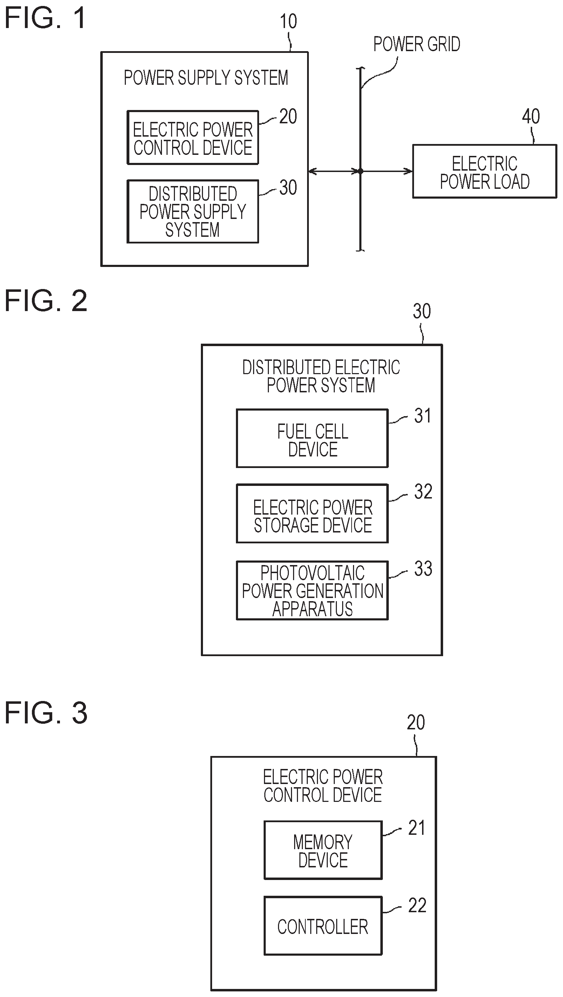

Fig. 1 is a diagram illustrating an example of a power supply system according to a first embodiment. Fig. 2 is a diagram illustrating an example of a distributed power supply system included in the power supply system according to the first embodiment. Fig. 3 is a diagram illustrating an example of an electric power control device according to the first embodiment.

A power supply system 10 according to the present embodiment includes an electric power control device 20 and a distributed power supply system 30 as illustrated in Fig. 1.

In this case, in the example illustrated in Fig. 2, the distributed power supply system 30 includes a fuel cell device 31, an electric power storage device 32, and a photovoltaic power generation apparatus 33, which supply electric power to an electric power load 40 of a power consumer.

The "power consumer" is the entity that owns the electric power load 40 and receives the service of electric power generated and supplied by the power supply system 10. Examples of the "power consumer" include, but are not limited to, factories, stores, and homes.

Note that the power supply system 10 may be, for example, a system that supplies a large amount of power to the power grid. In this case, the fuel cell device 31, the photovoltaic power generation apparatus 33, and the electric power storage device 32 each include a fuel cell unit group constituted by a plurality of fuel cell units including a fuel cell stack, a photovoltaic cell group constituted by a plurality of photovoltaic cells including photovoltaic panels, and a storage battery unit group constituted by a plurality of storage battery units. The detailed configuration of the power supply system 10 will be described in a second embodiment.

The electric power storage device 32 is a device that stores electric power generated by the fuel cell device 31 and the photovoltaic power generation apparatus 33 or electric power received from the power grid under control performed by the electric power control device 20. The electric power stored in the electric power storage device 32 may be discharged to the electric power load 40 of the power consumer or the power grid under control performed by the electric power control device 20. The electric power storage device 32 can transmit, to the electric power control device 20, a state of charge SOC (state of charge), which indicates the remaining amount of electric power (amount of electric charge) stored in the electric power storage device 32, for example, at appropriate timings. Examples of the electric power storage device 32 include, but are not limited to, known secondary batteries.

The fuel cell device 31 generates electric power using hydrogen supplied from a hydrogen supply source, which is not illustrated, under control performed by the electric power control device 20. Electric power generated by the fuel cell device 31 is supplied to the electric power load 40, the power grid, or the electric power storage device 32. Known devices can be used as the fuel cell device 31. Examples of the hydrogen supply source include, but are not limited to, hydrogen storage devices.

The photovoltaic power generation apparatus 33 is a power device that uses sunlight to convert light energy into electric power under control performed by the electric power control device 20. The electric power generated by the photovoltaic power generation apparatus 33 is supplied to the electric power load 40, the power grid, or the electric power storage device 32. Known devices can be used as the photovoltaic power generation apparatus 33.

As illustrated in Fig. 3, the electric power control device 20 includes a memory device 21 and a controller 22.

The memory device 21 is a memory for storing the actual electric power demanded by the power consumer, the chargeable power of the electric power storage device 32 that is less than or equal to the maximum charging power of the electric power storage device 32 (hereinafter referred to as the chargeable power of the electric power storage device 32), and the actual electric power generated by the fuel cell device 31.

In this case, the "actual electric power demanded by the power consumer" refers to the power consumed by the electric power load 40, and may be the latest data stored in the memory device 21 or a moving average of the most recent data sampled in a suitable sampling period and stored in the memory device 21.

The "actual electric power generated by the fuel cell device 31" refers to the rated output of the fuel cell device 31 or a predetermined output less than the rated output, and may be the latest data stored in the memory device 21 or a moving average of the most recent data sampled in a suitable sampling period and stored in the memory device 21.

The "maximum charging power of the electric power storage device 32" refers to the charging capacity (kW) of the electric power storage device 32 determined in accordance with the specifications and use state of the electric power storage device 32. The "maximum charging power of the electric power storage device 32" may be transmitted from the electric power storage device 32 to the electric power control device 20 at appropriate timings. The "chargeable power of the electric power storage device 32" may be, for example, the above maximum charging power or may be a value that is less than the above maximum charging power and that can be specified by the user or others. The user includes a direct or indirect user of the electric power control device 20. A direct user of the electric power control device 20 is, for example, the administrator of the electric power control device 20. An indirect user of the electric power control device 20 can be, for example, the owner entity of the power supply system 10. Such an owner entity may be the above power consumer or may be a power generation company that supplies electric power to the power consumer by using the power supply system 10.

The controller 22 sets the upper limit for electric power generated by the photovoltaic power generation apparatus 33 to a value less than or equal to the difference between the sum of the actual electric power demanded by the power consumer and the chargeable power of the electric power storage device 32 and the actual electric power generated by the fuel cell device 31.

It is sufficient that the controller 22 have a control function. The controller 22 includes an arithmetic processing unit (not illustrated) and a memory unit (not illustrated) that stores control programs. The arithmetic processing unit reads out and executes a control program stored in the memory unit, so that the controller 22 performs predetermined control. For example, an example of the arithmetic processing unit is a microprocessor. For example, an example of the memory unit is a memory.

[Operation]

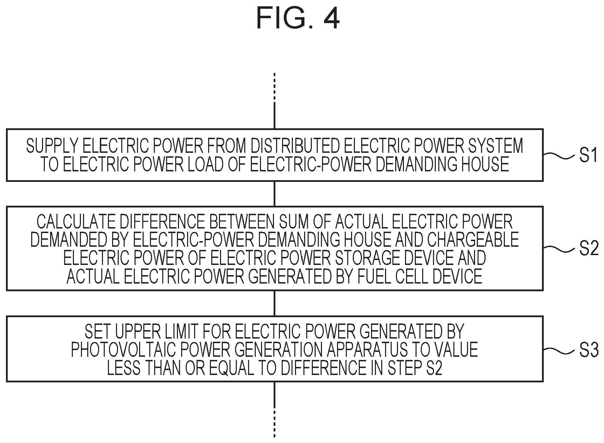

Fig. 4 is a flowchart illustrating an example of the operation of the electric power control device (an electric power control method) according to the first embodiment.

The following operation may be performed, for example, by the arithmetic processing unit of the controller 22 of the electric power control device 20 reading out a control program from the memory unit of the controller 22. Note that it is not necessarily required that the following operation be performed by the controller 22. The operator may perform part of the operation. The following example describes a case in which the operation is controlled by the controller 22.

First, in Step S1, the distributed power supply system 30 supplies electric power to the electric power load 40 of the power consumer.

Next, in Step S2, the difference between the sum of the actual electric power demanded by the power consumer and the chargeable power of the electric power storage device 32 and the actual electric power generated by the fuel cell device 31 is calculated.

Next, in Step S3, the upper limit for electric power generated by the photovoltaic power generation apparatus 33 is set to a value less than or equal to the difference in Step S2. As a result, when the electric power generated by the photovoltaic power generation apparatus 33 exceeds the upper limit for the electric power generated by the photovoltaic power generation apparatus 33 due to, for example, weather conditions, output control of the photovoltaic power generation apparatus 33 is performed such that the output of the photovoltaic power generation apparatus 33 is limited to the above upper limit for the generated electric power. In contrast, the output control of the photovoltaic power generation apparatus 33 is not performed unless the electric power generated by the photovoltaic power generation apparatus 33 exceeds the upper limit for the electric power generated by the photovoltaic power generation apparatus 33.

According to the present embodiment described above, the reverse electric power flow into the power grid from the distributed power supply system 30 can be reduced compared to before.

Specifically, the difference between the sum of the actual electric power demanded by the power consumer and the chargeable power of the electric power storage device 32 and the actual electric power generated by the fuel cell device 31 corresponds to the electric power that is generated by the photovoltaic power generation apparatus 33 and that can be used to feed electric power to the electric power load 40 and charge the electric power storage device 32. Thus, by setting the upper limit for the electric power generated by the photovoltaic power generation apparatus 33 to a value less than or equal to the difference between the sum of the actual electric power demanded by the power consumer and the chargeable power of the electric power storage device 32 and the actual electric power generated by the fuel cell device 31, the present embodiment makes it possible to appropriately suppress the reverse flow of the electric power generated by the photovoltaic power generation apparatus 33 into the power grid, compared to a case where the upper limit for the electric power generated by the photovoltaic power generation apparatus 33 is not set.

(Example 1)

An electric power control method according to the present example is substantially the same as the electric power control method according to the first embodiment, except for the details of control performed by the controller 22, which will be described below.

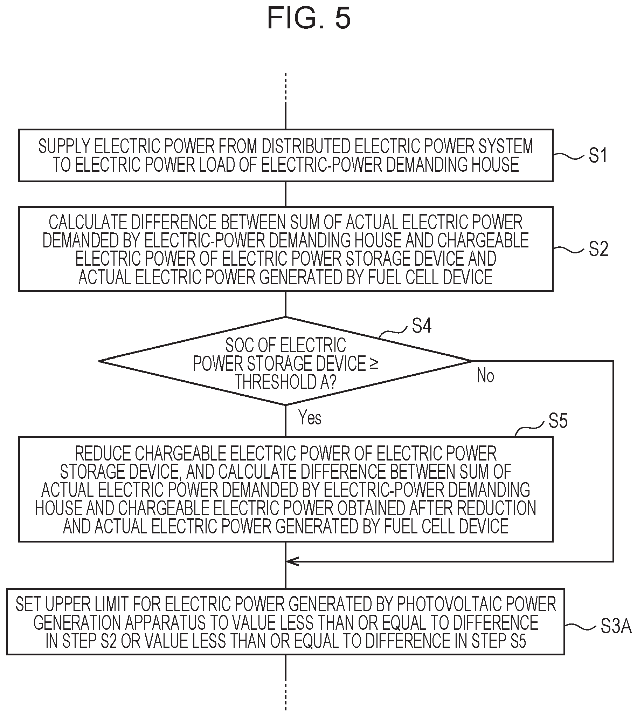

Fig. 5 is a flowchart illustrating an example of the operation of an electric power control device (an electric power control method) according to Example 1 of the first embodiment.

The following operation may be performed, for example, by the arithmetic processing unit of the controller 22 (see Fig. 3) of the electric power control device 20 reading out a control program from the memory unit of the controller 22. Note that it is not necessarily required that the following operation be performed by the controller 22. The operator may perform part of the operation. The following example describes a case in which the operation is controlled by the controller 22.

Note that Steps S1 and S2 of Fig. 5 are substantially the same as Steps S1 and S2 of Fig. 4, respectively, and thus description will be omitted.

In Step S4, it is determined whether or not the state of charge SOC of the electric power storage device 32 is greater than or equal to a threshold A.

In this case, the "threshold A" in Step S4 is set to a state of charge SOC of the electric power storage device 32 that is an appropriate value less than 100%. For example, the "threshold A" can be, but is not limited to, about 90%. The "threshold A" is an example of a "first threshold" of the present disclosure.

When the state of charge SOC of the electric power storage device 32 is greater than or equal to the threshold A (when "Yes" in Step S4), the chargeable power of the electric power storage device 32 is reduced, and the difference between the sum of the actual electric power demanded by the power consumer and the chargeable power after the reduction and the actual electric power generated by the fuel cell device 31 is calculated in Step S5, and the process proceeds to the next step, Step S3A.

In this case, the "chargeable power after the reduction" in Step S5 may be a value greater than or equal to 0 that can be specified by the user or others. For example, the "chargeable power after the reduction" can be, but is not limited to, 0.

When the state of charge SOC of the electric power storage device 32 is not greater than or equal to the threshold A (when "No" in Step S4), Step S5 is bypassed, and the process proceeds to the next step, Step S3A.

In Step S3A, the upper limit for the electric power generated by the photovoltaic power generation apparatus 33 is set to a value less than or equal to the difference in Step S2 or a value less than or equal to the difference in Step S5. In the latter case, when the "chargeable power after the reduction" in Step S5 is 0, the upper limit for the electric power generated by the photovoltaic power generation apparatus 33 is set to a value less than or equal to the difference between the actual electric power demanded by the power consumer and the actual electric power generated by the fuel cell device 31. As a result, when the electric power generated by the photovoltaic power generation apparatus 33 exceeds the upper limit for the electric power generated by the photovoltaic power generation apparatus 33 due to, for example, weather conditions, output control of the photovoltaic power generation apparatus 33 is performed such that the output of the photovoltaic power generation apparatus 33 is limited to the above upper limit for the generated electric power. In contrast, the output control of the photovoltaic power generation apparatus 33 is not performed unless the electric power generated by the photovoltaic power generation apparatus 33 exceeds the upper limit for the electric power generated by the photovoltaic power generation apparatus 33.

When the state of charge SOC of the electric power storage device 32 is greater than or equal to the threshold A, the electric power storage device 32 is more likely to be fully charged due to the electric power fed from the photovoltaic power generation apparatus 33 to the electric power storage device 32. When the electric power storage device 32 is fully charged, electric power cannot be further fed from the photovoltaic power generation apparatus 33 to the electric power storage device 32, and the electric power generated by the photovoltaic power generation apparatus 33 is more likely to flow back into the power grid.

Thus, according to the present example, when the state of charge SOC of the electric power storage device 32 is greater than or equal to the threshold A, the chargeable power of the electric power storage device 32 is reduced, and the difference between the sum of the actual electric power demanded by the power consumer and the above chargeable power after the reduction and the actual electric power generated by the fuel cell device 31 is calculated. As a result, by setting the upper limit for the electric power generated by the photovoltaic power generation apparatus 33 to a value less than or equal to this difference, the present example makes it possible to appropriately suppress the reverse flow of the electric power generated by the photovoltaic power generation apparatus 33 into the power grid, compared to a case where such chargeable power is not reduced.

Moreover, according to the present example, when the above chargeable power after the reduction is 0, the upper limit for the electric power generated by the photovoltaic power generation apparatus 33 is set to a value less than or equal to the difference between the actual electric power demanded by the power consumer and the actual electric power generated by the fuel cell device 31. As a result, the present example makes it possible to appropriately suppress the reverse flow of the electric power generated by the photovoltaic power generation apparatus 33 into the power grid, compared to a case where the chargeable power is not set to 0.

The electric power control method, the electric power control device 20, and the power supply system 10 according to the present example may be substantially the same as those of the first embodiment except for the features described above.

(Example 2)

An electric power control method according to the present example is substantially the same as the electric power control method according to the first embodiment or Example 1 of the first embodiment except for the details of control performed by the controller 22, which will be described below.

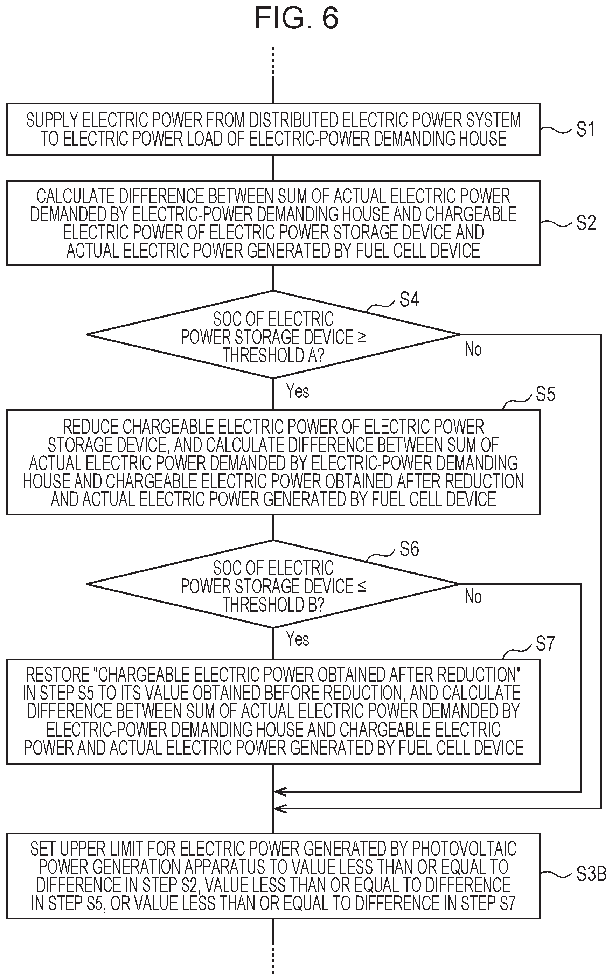

Fig. 6 is a flowchart illustrating an example of the operation of an electric power control device (an electric power control method) according to Example 2 of the first embodiment.

The following operation may be performed, for example, by the arithmetic processing unit of the controller 22 (see Fig. 3) of the electric power control device 20 reading out a control program from the memory unit of the controller 22. Note that it is not necessarily required that the following operation be performed by the controller 22. The operator may perform part of the operation. The following example describes a case in which the operation is controlled by the controller 22.

Note that Steps S1 and S2 of Fig. 6 are substantially the same as Steps S1 and S2 of Fig. 4, respectively, and thus description will be omitted. Steps S4 and S5 of Fig. 6 are substantially the same as Steps S4 and S5 of Fig. 5, respectively, except that when the state of charge SOC of the electric power storage device 32 is not less than or equal to the threshold A (when "No" in Step S4), Steps S5 to S7 are bypassed and the process proceeds to Step S3B, and thus description will be omitted.

In Step S6, it is determined whether or not the state of charge SOC of the electric power storage device 32 is less than or equal to a threshold B.

In this case, the "threshold B" in Step S6 is set to a state of charge SOC of the electric power storage device 32 that is an appropriate value less than the threshold A. For example, the "threshold B" can be, but is not limited to, about 85%. The "threshold B" is an example of a "second threshold" of the present disclosure.

When the state of charge SOC of the electric power storage device 32 is less than or equal to the threshold B (when "Yes" in Step S6), the "chargeable power after the reduction" in Step S5 is restored to its value before the reduction, and the difference between the sum of the actual electric power demanded by the power consumer and the chargeable power and the actual electric power generated by the fuel cell device 31 is calculated in Step S7, and the process proceeds to the next step, Step S3B.

When the state of charge SOC of the electric power storage device 32 is not less than or equal to the threshold B (when "No" in Step S6), Step S7 is bypassed, and the process proceeds to the next step, Step S3B.

In Step S3B, the upper limit for the electric power generated by the photovoltaic power generation apparatus 33 is set to a value less than or equal to the difference in Step S2, a value less than or equal to the difference in Step S5, or a value less than or equal to the difference in Step S7. As a result, when the electric power generated by the photovoltaic power generation apparatus 33 exceeds the upper limit for the electric power generated by the photovoltaic power generation apparatus 33 due to, for example, weather conditions, output control of the photovoltaic power generation apparatus 33 is performed such that the output of the photovoltaic power generation apparatus 33 is limited to the above upper limit for the generated electric power. In contrast, the output control of the photovoltaic power generation apparatus 33 is not performed unless the electric power generated by the photovoltaic power generation apparatus 33 exceeds the upper limit for the electric power generated by the photovoltaic power generation apparatus 33.

If the timing at which the chargeable voltage is restored to its value before the reduction is when the state of charge SOC of the electric power storage device 32 is less than or equal to the threshold value B, the possibility of the state of charge SOC of the electric power storage device 32 becoming greater than or equal to the threshold value A again in a short time is reduced. In other words, the occurrence of events can be suppressed in which the suppression of the electric power generated by the photovoltaic power generation apparatus 33 and the release of the suppression are repeated in a short period of time.

Moreover, according to the present example, when the state of charge SOC of the electric power storage device 32 is less than or equal to the threshold B, the chargeable power after the reduction is restored to its value before the reduction, and the difference between the sum of the actual electric power demanded by the power consumer and the chargeable power and the actual electric power generated by the fuel cell device is calculated. By setting the upper limit for the electric power generated by the photovoltaic power generation apparatus 33 to a value less than or equal to this difference, the present example makes it possible to use the electric power generated by the photovoltaic power generation apparatus 33 effectively. In other words, the upper limit for the electric power generated by the photovoltaic power generation apparatus 33 calculated on the basis of the chargeable power before the reduction is higher than the upper limit for the electric power generated by the photovoltaic power generation apparatus 33 calculated on the basis of the chargeable power after the reduction. Then, the higher the upper limit for the electric power generated by the photovoltaic power generation apparatus 33, the less likely it is that the output of the photovoltaic power generation apparatus 33 will be limited to the upper limit for the generated electric power, so that the electric power generated by the photovoltaic power generation apparatus 33 can be effectively used. As a result, the electric power generation self-sufficiency ratio in the power supply system 10 can be improved.

The electric power control method, the electric power control device 20, and the power supply system 10 according to the present example may be substantially the same as those of the first embodiment or Example 1 of the first embodiment except for the features described above.

(Second Embodiment)

[Device Configuration]

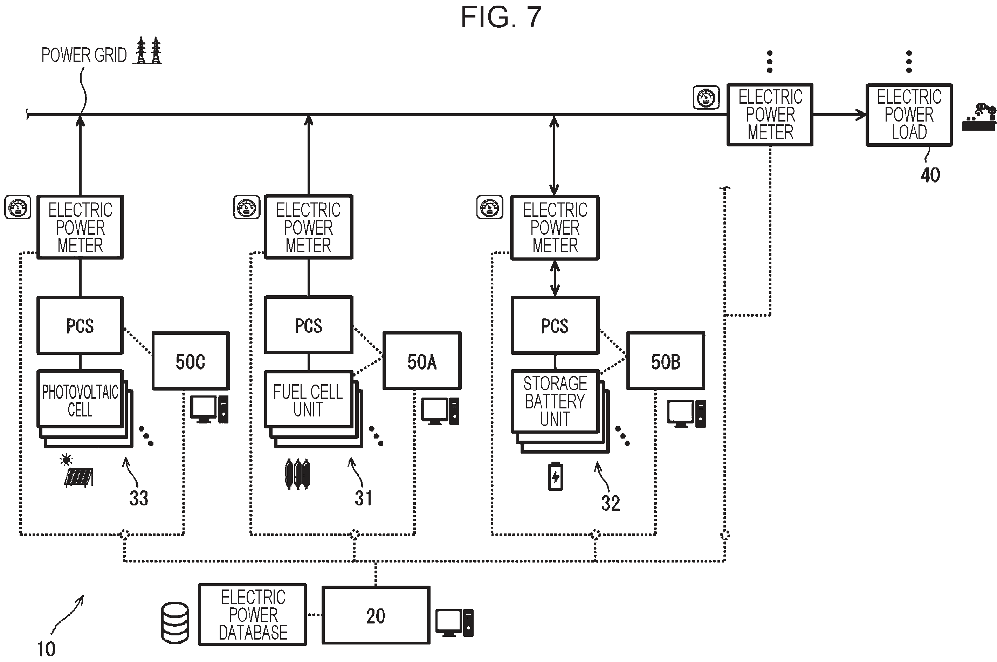

Fig. 7 is a diagram illustrating an example of a power supply system according to a second embodiment. In Fig. 7, for convenience, the solid lines and the dashed lines indicate paths along which electric power is transmitted and paths along which signals are transmitted, respectively.

The power supply system 10 according to the present embodiment includes the electric power control device 20, the fuel cell device 31, the electric power storage device 32, the photovoltaic power generation apparatus 33, and control devices 50A to 50C as illustrated in Fig. 7.

In this case, the configuration within the electric power control device 20 is substantially the same as the configuration in the first embodiment, and thus detailed description will be omitted.

In the example illustrated in Fig. 7, the fuel cell device 31 includes a fuel cell unit group constituted by a plurality of fuel cell units. This fuel cell unit group is grouped into a plurality of groups each of which includes a plurality of fuel cell units. Each of the plurality of fuel cell units in each group is connected to the power grid through a power conditioner (PCS) and an electric power meter. This electric power meter is connected to the electric power control device 20 through a communication network. The number of fuel cell units in each group is set to an appropriate value based on the output specifications of the power supply system 10 and other factors.

Although illustration is omitted, each of these fuel cell units is constituted by, for example, a fuel cell stack, auxiliary devices such as pumps and valves, and a control device that controls the operation of these devices. Note that when no control device is provided in the fuel cell unit, the operation of the above devices may be directly controlled by the control device 50A.

The photovoltaic power generation apparatus 33 includes a photovoltaic cell group constituted by a plurality of photovoltaic cells including photovoltaic panels. This photovoltaic cell group is grouped into a plurality of groups each of which includes a plurality of photovoltaic cells. Each of the plurality of photovoltaic cells in each group is connected to the power grid through a power conditioner (PCS) and an electric power meter. This electric power meter is connected to the electric power control device 20 through the communication network. The number of photovoltaic cells in each group is set to an appropriate value based on the output specifications of the power supply system 10 and other factors.

The electric power storage device 32 includes a storage battery unit group constituted by a plurality of storage battery units. This storage battery unit group is grouped into a plurality of groups each of which includes a plurality of storage battery units. Each of the plurality of storage battery units in each group is connected to the power grid through a power conditioner (PCS) and an electric power meter. This electric power meter is connected to the electric power control device 20 through the communication network. The number of storage battery units in each group is set to an appropriate value based on the output specifications of the power supply system 10 and other factors.

Furthermore, the fuel cell device 31, the electric power storage device 32, and the photovoltaic power generation apparatus 33 are connected in parallel with each other through the power grid, and are also connected to the electric power load 40 of the power consumer through an electric power meter. This electric power meter is connected to the electric power control device 20 through the communication network.

Note that the above configuration of the power supply system 10 is an example and is not limited to this example. For example, the fuel cell unit group may be grouped into a single group constituted by the plurality of fuel cell units or into groups each of which includes a single fuel cell unit. The photovoltaic cell group may be grouped into a single group constituted by the plurality of photovoltaic cells or into groups each of which includes a single photovoltaic cell. The storage battery unit group may be grouped into a single group constituted by the plurality of storage battery units or into groups each of which includes a single storage battery unit.

The control devices 50A to 50C are provided so as to correspond to the fuel cell device 31, the electric power storage device 32, and the photovoltaic power generation apparatus 33, respectively, and are connected to the electric power control device 20 through the communication network.

For example, the control device 50A controls the output of each of these fuel cell units through the communication network to enable efficient operation of the fuel cell units (for example, to optimize their lifetime). The control device 50B may control charging and discharging of the electric power of the electric power storage device 32 by controlling the power conditioner (PCS) through the communication network. The control device 50C may control the output of the photovoltaic power generation apparatus 33 by controlling the power conditioner (PCS) through the communication network, or use the power conditioner (PCS) to disconnect a desired number of photovoltaic cells from or connect a desired number of photovoltaic cells in parallel to the power grid.

Note that the above is an example and is not limited to this example. For example, the controller 22 (see Fig. 3) of the electric power control device 20 may directly control the operations of the devices corresponding to the respective control devices 50A to 50C, without using the control devices 50A to 50C. The electric power control device 20 may be integrated with the control devices 50A to 50C. In other words, the electric power control device 20 may be equipped with the control functions of the control devices 50A to 50C and directly control the operations of the devices corresponding to the respective control devices 50A to 50C.

It is sufficient that the control devices 50A to 50C have control functions. The control devices 50A to 50C include arithmetic processing units (not illustrated), memory units that stores control programs, and communication devices. The arithmetic processing units read out and execute control programs stored in the memory units, so that the control devices 50A to 50C perform predetermined control. For example, an example of the arithmetic processing units is a microprocessor. For example, an example of the memory units is a memory.

[Operation]

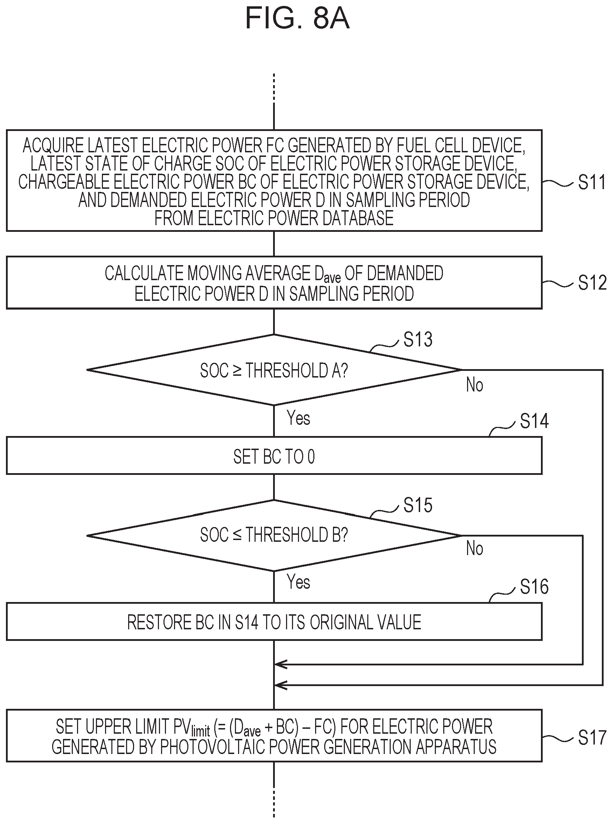

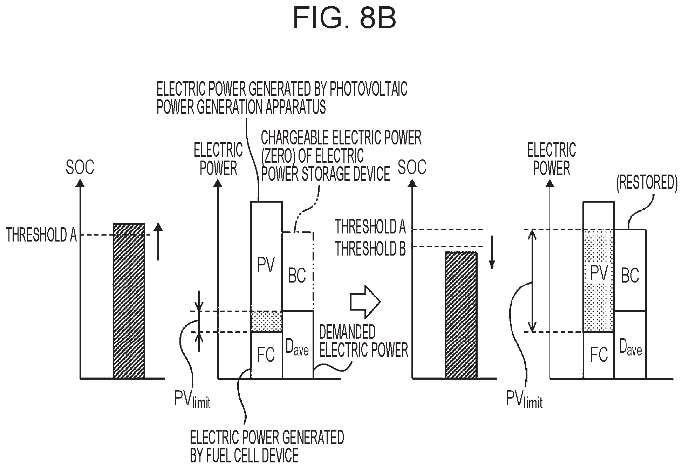

Fig. 8A is a flowchart illustrating an example of the operation of the electric power control device (the electric power control method) according to the second embodiment. Fig. 8B is a diagram for describing an example of the operation of the electric power control device according to the second embodiment.

The following operation may be performed, for example, by the arithmetic processing unit of the controller 22 (see Fig. 3) of the electric power control device 20 reading out a control program from the memory unit of the controller 22. Note that it is not necessarily required that the following operation be performed by the controller 22. The operator may perform part of the operation. The following example describes a case in which the operation is controlled by the controller 22.

First, in Step S11, the latest electric power FC generated by the fuel cell device 31, the latest state of charge SOC of the electric power storage device 32, a chargeable power BC of the electric power storage device 32, and a demanded electric power D in a sampling period are acquired from an electric power database. In this case, the "sampling period" can be, but is not limited to, about 10 minutes, for example.

In Step S12, a moving average $D_{ave}$ of the demanded electric power D in the sampling period is calculated.

In Step S13, it is determined whether or not the state of charge SOC of the electric power storage device 32 is greater than or equal to the threshold A.

In this case, the "threshold A" in Step S13 is set to a state of charge SOC of the electric power storage device 32 that is an appropriate value less than 100%. For example, the "threshold A" can be, but is not limited to, about 90%. The "threshold A" is an example of the "first threshold" of the present disclosure.

When the state of charge SOC of the electric power storage device 32 is greater than or equal to the threshold A (when "Yes" in Step S13), the chargeable power BC of the electric power storage device 32 is specified to be 0 in Step S14, and the process proceeds to the next step, Step S15.

When the state of charge SOC of the electric power storage device 32 is not greater than or equal to the threshold A (when "No" in Step S13), Steps S14 to S16 are bypassed, and the process proceeds to Step S17.

In Step S15, it is determined whether or not the state of charge SOC of the electric power storage device 32 is less than or equal to the threshold B.

In this case, the "threshold B" in Step S15 is set to a state of charge SOC of the electric power storage device 32 that is an appropriate value less than the threshold A. For example, the "threshold B" can be, but is not limited to, about 85%. The "threshold B" is an example of the "second threshold" of the present disclosure.

When the state of charge SOC of the electric power storage device 32 is less than or equal to the threshold B (when "Yes" in Step S15), the chargeable power BC of the electric power storage device 32 is restored from 0 to its original value in Step S16, and the process proceeds to Step S17.

When the state of charge SOC of the electric power storage device 32 is not less than or equal to the threshold B (when "No" in Step S15), Step S16 is bypassed, and the process proceeds to Step S17.

In Step S17, an upper limit $PV_{limit}$ for the electric power generated by the photovoltaic power generation apparatus 33 is set by Equation (1) below.

$$PV_{limit} = (D_{ave} + BC) - FC \quad ... \quad (1)$$

For example, as illustrated in the left diagram of Fig. 8B, when the state of charge SOC of the electric power storage device 32 is greater than or equal to the threshold A, the chargeable power BC of the electric power storage device 32 is specified to be 0, and thus the upper limit $PV_{limit}$ for the electric power generated by the photovoltaic power generation apparatus 33 is set to electric power in the region ($D_{ave} - FC$) corresponding to a shaded portion in Fig. 8B.

Then, an instruction as to the upper limit $PV_{limit}$ (= $D_{ave}$ - FC) for the electric power generated by the photovoltaic power generation apparatus 33 is issued to the control device 50C of the photovoltaic power generation apparatus 33. As a result, the control device 50C executes output control of the photovoltaic power generation apparatus 33 using the power conditioner (PCS) such that the output of the photovoltaic power generation apparatus 33 is limited to the upper limit $PV_{limit}$ for the generated electric power.

For example, as illustrated in the right diagram of Fig. 8B, when the state of charge SOC of the electric power storage device 32 is less than or equal to the threshold B, the chargeable power BC of the electric power storage device 32 is restored, and thus the upper limit $PV_{limit}$ for the electric power generated by the photovoltaic power generation apparatus 33 is set to electric power in the region ($D_{ave} + BC - FC$) corresponding to a shaded portion in Fig. 8B.

Then, an instruction as to the upper limit $PV_{limit}$ (= $D_{ave}$ + BC - FC) for the electric power generated by the photovoltaic power generation apparatus 33 is issued to the control device 50C of the photovoltaic power generation apparatus 33. As a result, the control device 50C executes output control of the photovoltaic power generation apparatus 33 using the power conditioner (PCS) such that the output of the photovoltaic power generation apparatus 33 is limited to the upper limit $PV_{limit}$ for the generated electric power.

The operational effects realized by the electric power control method, the electric power control device 20, and the power supply system 10 according to the present embodiment can be easily understood from the operational effects described in the first embodiment, and thus description will be omitted.

The electric power control method, the electric power control device 20, and the power supply system 10 according to the present embodiment may be substantially the same as those of any one of the first embodiment and Examples 1 and 2 of the first embodiment except for the features described above.

(Modification)

The output control of the photovoltaic power generation apparatus 33 performed by the control device 50C is not limited to the above. For example, the control device 50C may control the output of the photovoltaic power generation apparatus 33 by disconnecting a desired number of photovoltaic cells from or connecting a desired number of photovoltaic cells to the power grid using power conditioners (PCS). In other words, when the output from each of the plurality of power conditioners (PCS) to the power grid is the same, the number of power conditioners (PCS) to be disconnected from or connected to the power grid can be identified from the upper limit $PV_{limit}$ for the electric power generated by the photovoltaic power generation apparatus 33.

As a result, the control device 50C can disconnect a desired number of photovoltaic cells from or connect a desired number of photovoltaic cells to the power grid using the power conditioners (PCS) such that the output of the photovoltaic power generation apparatus 33 does not exceed the upper limit $PV_{limit}$ for the generated electric power.

The electric power control method, the electric power control device 20, and the power supply system 10 according to the present modification may be substantially the same as those of any one of the first embodiment, Examples 1 and 2 of the first embodiment, and the second embodiment except for the features described above.

The first embodiment, Examples 1 and 2 of the first embodiment, the second embodiment, and the modification of the second embodiment may be combined with each other as long as they do not exclude each other. From the above description, many improvements and other embodiments of the present disclosure will be apparent to those skilled in the art. Accordingly, the above description is to be construed as an example only, and is provided for the purpose of instructing those skilled in the art as to the best mode for implementing the present disclosure. Details of their structures, functions, or both can be substantially changed without departing from the spirit of the present disclosure.

Industrial Applicability

An aspect of the present disclosure can be used as an electric power control method, an electric power control device, and a power supply system that enable the reverse electric power flow into the power grid from a distributed power supply system to be reduced compared to before.

Reference Signs List

10 power supply system
20 electric power control device
21 memory device
22 controller
30 distributed power supply system
31 fuel cell device
32 electric power storage device
33 photovoltaic power generation apparatus
40 electric power load
SOA control device
50B control device
50C control device
A threshold
B threshold

**Claims**

1.  An electric power control method comprising: when electric power is supplied from a distributed power supply system that includes a photovoltaic power generation apparatus, a fuel cell device, and an electric power storage device to an electric power load of a power consumer, setting an upper limit for electric power generated by the photovoltaic power generation apparatus to a value less than or equal to a difference between a sum of actual electric power demanded by the power consumer and chargeable power of the electric power storage device, which is less than or equal to maximum charging power of the electric power storage device, and actual electric power generated by the fuel cell device.

2.  The electric power control method according to claim 1, wherein when a state of charge of the electric power storage device is greater than or equal to a first threshold, which is less than 100%, the chargeable power is reduced, and the difference is calculated.

3.  The electric power control method according to claim 2, wherein a value of the chargeable power after the reduction is 0.

4.  The electric power control method according to claim 2 or 3, wherein when the state of charge of the electric power storage device is less than or equal to a second threshold, which is less than the first threshold, the chargeable power after the reduction is restored to a value of the chargeable power before the reduction, and the difference is calculated.

5.  An electric power control device of a distributed power supply system including a photovoltaic power generation apparatus, a fuel cell device, and an electric power storage device, which supply electric power to an electric power load of a power consumer, the electric power control device comprising:

    a memory device that stores actual electric power demanded by the power consumer, chargeable power of the electric power storage device, which is less than or equal to maximum charging power of the electric power storage device, and actual electric power generated by the fuel cell device; and
    a controller that sets an upper limit for electric power generated by the photovoltaic power generation apparatus to a value less than or equal to a difference between a sum of the actual electric power demanded by the power consumer and the chargeable power and the actual electric power generated by the fuel cell device.

6.  A power supply system comprising:

    a photovoltaic power generation apparatus;
    a fuel cell device;
    an electric power storage device; and
    the electric power control device according to claim 5.

FIG. 1

POWER SUPPLY SYSTEM 10

POWER GRID

ELECTRIC POWER CONTROL DEVICE 20

DISTRIBUTED POWER SUPPLY SYSTEM 30

ELECTRIC POWER LOAD 40

FIG. 2

DISTRIBUTED ELECTRIC POWER SYSTEM 30

FUEL CELL DEVICE 31

ELECTRIC POWER STORAGE DEVICE 32

PHOTOVOLTAIC POWER GENERATION APPARATUS 33

FIG. 3

ELECTRIC POWER CONTROL DEVICE 20

MEMORY DEVICE 21

CONTROLLER 22

# FIG. 4

SUPPLY ELECTRIC POWER FROM DISTRIBUTED ELECTRIC POWER SYSTEM
TO ELECTRIC POWER LOAD OF ELECTRIC-POWER DEMANDING HOUSE — S1

CALCULATE DIFFERENCE BETWEEN SUM OF ACTUAL ELECTRIC POWER
DEMANDED BY ELECTRIC-POWER DEMANDING HOUSE AND CHARGEABLE
ELECTRIC POWER OF ELECTRIC POWER STORAGE DEVICE AND
ACTUAL ELECTRIC POWER GENERATED BY FUEL CELL DEVICE — S2

SET UPPER LIMIT FOR ELECTRIC POWER GENERATED BY
PHOTOVOLTAIC POWER GENERATION APPARATUS TO VALUE
LESS THAN OR EQUAL TO DIFFERENCE IN STEP S2 — S3

# FIG. 5

SUPPLY ELECTRIC POWER FROM DISTRIBUTED ELECTRIC POWER SYSTEM TO ELECTRIC POWER LOAD OF ELECTRIC-POWER DEMANDING HOUSE — S1

CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER OF ELECTRIC POWER STORAGE DEVICE AND ACTUAL ELECTRIC POWER GENERATED BY FUEL CELL DEVICE — S2

S4
SOC OF ELECTRIC POWER STORAGE DEVICE ≥ THRESHOLD A?

No

Yes

S5
REDUCE CHARGEABLE ELECTRIC POWER OF ELECTRIC POWER STORAGE DEVICE, AND CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER OBTAINED AFTER REDUCTION AND ACTUAL ELECTRIC POWER GENERATED BY FUEL CELL DEVICE

SET UPPER LIMIT FOR ELECTRIC POWER GENERATED BY PHOTOVOLTAIC POWER GENERATION APPARATUS TO VALUE LESS THAN OR EQUAL TO DIFFERENCE IN STEP S2 OR VALUE LESS THAN OR EQUAL TO DIFFERENCE IN STEP S5 — S3A

# FIG. 6

SUPPLY ELECTRIC POWER FROM DISTRIBUTED ELECTRIC POWER SYSTEM TO ELECTRIC POWER LOAD OF ELECTRIC-POWER DEMANDING HOUSE — S1

CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER OF ELECTRIC POWER STORAGE DEVICE AND ACTUAL ELECTRIC POWER GENERATED BY FUEL CELL DEVICE — S2

S4

SOC OF ELECTRIC POWER STORAGE DEVICE ≥ THRESHOLD A?     No

Yes     S5

REDUCE CHARGEABLE ELECTRIC POWER OF ELECTRIC POWER STORAGE DEVICE, AND CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER OBTAINED AFTER REDUCTION AND ACTUAL ELECTRIC POWER GENERATED BY FUEL CELL DEVICE

S6

SOC OF ELECTRIC POWER STORAGE DEVICE ≤ THRESHOLD B?     No

Yes     S7

RESTORE "CHARGEABLE ELECTRIC POWER OBTAINED AFTER REDUCTION" IN STEP S5 TO ITS VALUE OBTAINED BEFORE REDUCTION, AND CALCULATE DIFFERENCE BETWEEN SUM OF ACTUAL ELECTRIC POWER DEMANDED BY ELECTRIC-POWER DEMANDING HOUSE AND CHARGEABLE ELECTRIC POWER AND ACTUAL ELECTRIC POWER GENERATED BY FUEL CELL DEVICE

SET UPPER LIMIT FOR ELECTRIC POWER GENERATED BY PHOTOVOLTAIC POWER GENERATION APPARATUS TO VALUE LESS THAN OR EQUAL TO DIFFERENCE IN STEP S2, VALUE LESS THAN OR EQUAL TO DIFFERENCE IN STEP S5, OR VALUE LESS THAN OR EQUAL TO DIFFERENCE IN STEP S7 — S3B

FIG. 7

# FIG. 8A

ACQUIRE LATEST ELECTRIC POWER FC GENERATED BY FUEL CELL DEVICE, LATEST STATE OF CHARGE SOC OF ELECTRIC POWER STORAGE DEVICE, CHARGEABLE ELECTRIC POWER BC OF ELECTRIC POWER STORAGE DEVICE, AND DEMANDED ELECTRIC POWER D IN SAMPLING PERIOD FROM ELECTRIC POWER DATABASE — S11

CALCULATE MOVING AVERAGE $D_{ave}$ OF DEMANDED ELECTRIC POWER D IN SAMPLING PERIOD — S12

S13 — SOC ≥ THRESHOLD A?
No
Yes

S14 — SET BC TO 0

S15 — SOC ≤ THRESHOLD B?
No
Yes

S16 — RESTORE BC IN S14 TO ITS ORIGINAL VALUE

SET UPPER LIMIT $PV_{limit}$ (= ($D_{ave}$ + BC) − FC) FOR ELECTRIC POWER GENERATED BY PHOTOVOLTAIC POWER GENERATION APPARATUS — S17

# FIG. 8B

ELECTRIC POWER GENERATED BY PHOTOVOLTAIC POWER GENERATION APPARATUS

CHARGEABLE ELECTRIC POWER (ZERO) OF ELECTRIC POWER STORAGE DEVICE

SOC

ELECTRIC POWER

THRESHOLD A

PV

BC

FC

$D_{ave}$

$PV_{limit}$

ELECTRIC POWER GENERATED BY FUEL CELL DEVICE

SOC

ELECTRIC POWER

THRESHOLD A
THRESHOLD B

DEMANDED ELECTRIC POWER

(RESTORED)

PV

BC

FC

$D_{ave}$

$PV_{limit}$

## INTERNATIONAL SEARCH REPORT

| International application No. |
| --- |
| **PCT/JP2024/030920** |

| A. | CLASSIFICATION OF SUBJECT MATTER |
| --- | --- |

*H02J 3/46*(2006.01)i; *H02J 3/32*(2006.01)i; *H02J 3/38*(2006.01)i
FI:   H02J3/46; H02J3/32; H02J3/38 130; H02J3/38 170

According to International Patent Classification (IPC) or to both national classification and IPC

| B. | FIELDS SEARCHED |
| --- | --- |

Minimum documentation searched (classification system followed by classification symbols)

H02J3/46; H02J3/32; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2011-120452 A (TABUCHI ELECTRIC CO., LTD.) 16 June 2011 (2011-06-16) paragraphs [0015]-[0044], fig. 1-4 | 1-6 |
| A | JP 2019-161863 A (HITACHI POWER SOLUTIONS CO., LTD.) 19 September 2019 (2019-09-19) paragraphs [0016]-[0022], [0033], fig. 1-2 | 1-6 |
| A | JP 2019-187022 A (HITACHI, LTD.) 24 October 2019 (2019-10-24) paragraphs [0014]-[0063], fig. 1-4 | 1-6 |
| A | JP 2020-48299 A (FUJI ELECTRIC CO., LTD.) 26 March 2020 (2020-03-26) paragraphs [0020]-[0048], fig. 1-7 | 1-6 |

☐ Further documents are listed in the continuation of Box C.    ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 October 2024** | **22 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/030920**

| Patent document cited in search report | | | Publication date (day/month/year) | Patent family member(s) | Publication date (day/month/year) |
|---|---|---|---|---|---|
| JP | 2011-120452 | A | 16 June 2011 | (Family: none) | |
| JP | 2019-161863 | A | 19 September 2019 | (Family: none) | |
| JP | 2019-187022 | A | 24 October 2019 | (Family: none) | |
| JP | 2020-48299 | A | 26 March 2020 | (Family: none) | |

Form PCT/ISA/210 (patent family annex) (July 2022)

**EP 4 787 659 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6792272 B